# EUROPÄISCHE PATENTSCHRIFT

(11) **EP 0 926 785 B1**
(45) Veröffentlichungstag und Bekanntmachung des Hinweises auf die Patenterteilung: **18.07.2001**
(21) Anmeldenummer: 97122918.2
(22) Anmeldetag: 27.12.1997
(51) Int. Cl.: H01S 3/036, H01S 3/134

(54) **Verfahren zur Steuerung einer Vorrichtung zum Lasergasaustausch an einem Gasentladungsraum einer Gaslaseranordnung sowie Vorrichtung zur Durchführung dieses Verfahrens**
Method to control a laser gas exchange device connected to a gas discharge space of a gas laser apparatus and device for carrying out this method
Procédé de commande d'un échangeur de gaz à laser connecté à un espace de décharge de gaz d'un laser à gaz et appareil pour la mise en oeuvre du procédé

(43) Veröffentlichungstag der Anmeldung: 30.06.1999
(73) Patentinhaber: Trumpf GmbH & Co, D-71254 Ditzingen (DE)
(72) Erfinder: von Borstel, Michael, 74385 Pleidelsheim (DE)
(74) Vertreter: KOHLER SCHMID + PARTNER

(56) Entgegenhaltungen:
- DE-A- 3 425 902
- US-A- 4 977 573
- US-A- 5 440 578
- US-A- 5 450 436
- PATENT ABSTRACTS OF JAPAN vol. 016, no. 196 (E-1200), 12.Mai 1992 & JP 04 029386 A (HITACHI LTD), 31.Januar 1992,
- PATENT ABSTRACTS OF JAPAN vol. 097, no. 008, 29.August 1997 & JP 09 107138 A (ISHIKAWAJIMA HARIMA HEAVY IND CO LTD), 22.April 1997,
- PATENT ABSTRACTS OF JAPAN vol. 012, no. 348 (E-659), 19.September 1988 & JP 63 104392 A (MITSUBISHI ELECTRIC CORP), 9.Mai 1988,
- PATENT ABSTRACTS OF JAPAN vol. 013, no. 264 (E-774), 19.Juni 1989 & JP 01 057689 A (MITSUBISHI ELECTRIC CORP), 3.März 1989,
- PATENT ABSTRACTS OF JAPAN vol. 013, no. 117 (E-731), 22.März 1989 & JP 63 288081 A (FANUC LTD), 25.November 1988,
- PATENT ABSTRACTS OF JAPAN vol. 012, no. 211 (E-622), 16.Juni 1988 & JP 63 009183 A (KOMATSU LTD), 14.Januar 1988,
- PATENT ABSTRACTS OF JAPAN vol. 016, no. 486 (E-1276), 8.Oktober 1992 & JP 04 176177 A (AMADA CO LTD), 23.Juni 1992,
- PATENT ABSTRACTS OF JAPAN vol. 012, no. 393 (E-670), 19.Oktober 1988 & JP 63 133585 A (MATSUSHITA ELECTRIC IND CO LTD), 6.Juni 1988,
- PATENT ABSTRACTS OF JAPAN vol. 012, no. 211 (E-622), 16.Juni 1988 & JP 63 009187 A (KOMATSU LTD), 14.Januar 1988,

## Beschreibung

Die Erfindung betrifft ein Verfahren zur Steuerung einer Vorrichtung zum Lasergasaustausch an einem Gasentladungsraum einer Gaslaseranordnung, wobei der Ist-Wert wenigstens eines die Zusammensetzung des Inhalts des Gasentladungsraumes repräsentierenden Gaszustandsparameters ermittelt, anhand des ermittelten Ist-Wertes des Gaszustandsparamters ein Steuerwert für zumindest einen Betriebsparameter der Vorrichtung zum Lasergasaustausch ermittelt und die Vorrichtung zum Lasergasaustausch auf der Grundlage des ermittelten Steuerwertes gesteuert wird. Die Erfindung betrifft des Weiteren eine Vorrichtung zur Durchführung des genannten Verfahrens mit einer Steuerungseinrichtung für eine Vorrichtung zum Lasergasaustausch an einem Gasentladungsraum einer Gaslaseranordnung, wobei die Steuerungseinrichtung eine Auswerte- und Steuereinheit umfasst, welche mit zumindest einer Vorrichtung zur Erfassung des Ist-Wertes wenigstens eines die Zusammensetzung des Inhaltes des Gasentladungsraumes repräsentierenden Gaszustandparameters sowie mit der Vorrichtung zum Lasergasaustausch in Verbindung steht und mittels welcher zu dem oder den erfassten Ist-Werten des oder der Gaszustandsparamter ein Steuerwert für zumindest einen Betriebsparameter der Vorrichtung zum Lasergasaustausch ermittelbar und die letztgenannte Vorrichtung anhand des ermittelten Steuerwertes steuerbar ist.

In der Regel werden Gaslaseranordnungen mit einem Lasergas in Form eines Gemischs aus Kohlendioxid, Helium und Stickstoff betrieben. Dieses Lasergas steht in dem Gasentladungsraum der Gaslaseranordnung an. Während Stillstandszeiten der Anordnung können etwa infolge von Systemundichtigkeiten Verunreinigungen in den Gasentladungsraum eindringen. Während des Betriebes der Gaslaseranordnung ist das Lasergas Zersetzungsprozessen unterworfen, im Rahmen derer sich beispielsweise Kohlenmonoxid und/ oder Kondenswasser bilden. Die genannten Erscheinungen sind geeignet, den Inhalt des Gasentladungsraumes, der idealerweise von Lasergas einer bestimmten Beschaffenheit gebildet wird, derart zu verändern, daß die Funktionsfähigkeit der Gaslaseranordnung beeinträchtigt wird.

Um eine derartige Beeinträchtigung zu verhindern, wird der Gasentladungsraum von Gaslaseranordnungen bekanntermaßen unter Verwendung einer Vorrichtung zum Lasergasaustausch mit Lasergas durchspült. Beispielsweise verunreinigtes und/oder mit Zersetzungsprodukten angereichertes Lasergas wird dabei durch Lasergas mit einer eine optimale Funktionsfähigkeit der Gaslaseranordnung gewährleistenden Zusammensetzung ersetzt. Um den damit verbundenen Lasergasverbrauch möglichst gering zu halten, werden die Vorrichtungen zum Lasergasaustausch üblicherweise gesteuert betrieben.

Ein zu diesem Zweck anzuwendendes vorbekanntes Verfahren sowie eine gebräuchliche Vorrichtung zu dessen Durchführung sind aus EP-B-0 394 473 bekannt. Dabei wird einem Gasentladungsraum durch entsprechende Steuerung einer Lasergasversorgung sowie eines Auslaßventils der Gaslaseranordnung zunächst nach dem Inbetriebsetzen der Gaslaseranordnung während eines vorgegebenen Zeitintervalls eine vorgegebene, verhältnismäßig große Lasergasaustauschmenge zugeführt. Mit Ablauf des genannten Zeitintervalls wird die in den Gasentladungsraum aufgegebene Lasergasaustauschmenge durch entsprechende Steuerung der vorstehend erwähnten Teile der Vorrichtung zum Lasergasaustausch auf eine Austauschmenge reduziert, die wesentlich geringer ist als die dem Gasentladungsraum zunächst zugeführte Austauschmenge. Während der nachfolgenden Betriebszeit der Laseranordnung wird die reduzierte Lasergasaustauschmenge konstant beibehalten. Der verstärkte Lasergasaustausch zu Beginn soll dafür sorgen, dass der Inhalt des Gasentladungsraumes, der aufgrund der vorausgegangenen Stillstandszeit und der während dieser Zeit eingedrungenen Verunreinigungen in seiner Zusammensetzung von dem idealerweise vorzusehenden Lasergas stark abweicht, möglichst rasch gegen ein Medium ausgetauscht wird, das eine optimale Funktionsfähigkeit der Gaslaseranordnung ermöglicht. Mit dem Lasergasaustausch auf einem mengenmäßig reduzierten Niveau soll eine gleichbleibend zweckmäßige Zusammensetzung des Inhalts des Gasentladungsraumes sichergestellt werden. Die Betriebszeit der Gaslaseranordnung wird im Falle des vorbekannten Verfahrens als Parameter für die Zusammensetzung des Inhalts des Gasentladungsraumes herangezogen. Es wird unterstellt, dass nach Ablauf des hinsichtlich seiner Länge vorgegebenen Zeitintervalls verstärkten Lasergasaustauschs der Inhalt des Gasentladungsraumes eine Zusammensetzung aufweist, die einen optimalen Laserbetrieb ermöglicht. Für die sich anschließende Betriebszeit der Laseranordnung wird von einer ebenfalls zweckmäßigen und mit Zufuhr der vorgegebenen reduzierten Lasergasaustauschmenge aufrechtzuerhaltenden Zusammensetzung des Inhalts des Gasentladungsraumes ausgegangen.

Nachteiligerweise erlaubt es das vorbekannte Verfahren nicht, Abweichungen von den bezüglich der Zusammensetzung des Inhalts des Gasentladungsraumes üblicherweise herrschenden Bedingungen im Einzelfall zu berücksichtigen. Aus diesem Grunde ist es im Falle des Standes der Technik vonnöten, bei der Vorgabe der dem Gasentladungsraum der Gaslaseranordnung zuzuführenden Lasergasaustauschmengen einen gewissen Sicherheitsspielraum vorzusehen. Dies wiederum führt zu einem Lasergasverbrauch der Gaslaseranordnung, dessen Umfang den tatsächlich erforderlichen Umfang übersteigt und der dementsprechend vermeidbare Kosten verursacht.

US-A-5,440,578 offenbart ein gattungsgemäßes Verfahren zur Steuerung einer Vorrichtung zum Lasergasaustausch an einem Gasentladungsraum einer Gaslaseranordnung sowie eine entsprechende Vorrichtung, im Falle derer der Lasergasaustausch in Abhängigkeit von der Laserleistung, der Wellenlänge des Laserlichtes, der Bandbreite des Laserlichtes oder sonstiger "Betriebsparameter" gesteuert wird. "Betriebsparameter" im Sinne von US-A-5,440,578 sind Größen, die über die Laserbetriebszeit veränderlich sind.

Ausgehend von dem gattungsbildenden Stand der Technik liegt der vorliegenden Erfindung die Aufgabe zugrunde, die Steuerung des Lasergasaustausches verfahrens- sowie vorrichtungsmäßig zu vereinfachen.

Die angegebene verfahrensbezogene Aufgabe wird erfindungsgemäß dadurch gelöst, dass im Rahmen eines Verfahrens der eingangs genannten Art der Steuerwert für zumindest einen Betriebsparameter der Vorrichtung zum Lasergasaustausch anhand des ermittelten Ist-Wertes der Einschaltdauer der Gaslaseranordnung und/ oder der Stillstandszeit der Gaslaseranordnung seit dem unmittelbar vorausgegangenen Laserbetrieb ermittelt wird. Das erfindungsgemäße Verfahren erlaubt eine flexible Steuerung der Vorrichtung zum Lasergasaustausch, abgestimmt auf die in dem Gasentladungsraum der Gaslaseranordnung jeweils herrschenden Bedingungen. Dem Gasentladungsraum wird eine Lasergasaustauschmenge nur in dem tatsächlich erforderlichen Umfang zugeführt.

Der Steuerwert für zumindest einen Betriebsparameter der Vorrichtung zum Lasergasaustausch wird in Weiterbildung der Erfindung außerdem ermittelt anhand des ermittelten Ist-Wertes des Anteils wenigstens einer Komponente des Lasergases in dem Gasentladungsraum und/oder des Kohlenmonoxidgehaltes des Lasergases in dem Gasentladungsraum und/oder des Ausmaßes der Verunreinigung des Lasergases in dem Gasentladungsraum und/oder des Wassergehaltes des Inhaltes des Gasentladungsraums und/oder der Temperatur des Lasergases in dem Gasentladungsraum und/oder der momentanen Laserleistung.

In bevorzugter Ausgestaltung des erfindungsgemäßen Verfahrens ist vorgesehen, dass der Steuerwert für zumindest einen Betriebsparameter der Vorrichtung zum Lasergasaustausch auf der Grundlage eines Vergleichs des ermittelten Ist-Wertes eines Gaszustandsparameters mit einem zugehörigen Soll-Wert ermittelt wird.

Eine Variante des erfindungsgemäßen Verfahrens, im Falle derer die Vorrichtung zum Lasergasaustausch wenigstens ein Ventil aufweist, ist dadurch gekennzeichnet, daß anhand des ermittelten Ist-Wertes des oder der betreffenden Gaszustandsparameter ein Steuerwert für die Lasergasdurchflußmenge durch das oder die Ventile ermittelt wird.

Im Interesse einer Automatisierung des erfindungsgemäßen Verfahrens wird dieses bevorzugtermaßen programmgesteuert durchgeführt.

Zur Lösung der vorstehend genannten vorrichtungsbezogenen Aufgabe ist erfindungsgemäß vorgesehen, daß im Falle einer Vorrichtung der eingangs angegebenen Gattung ein Betriebsstundenzähler zur Erfassung des Ist-Wertes der Einschaltdauer der Gaslaseranordnung und/oder eine Uhr zur Erfassung des Ist-Wertes der Stillstandszeit der Gaslaseranordnung seit dem unmittelbar vorausgegangenen Laserbetrieb vorgesehen ist und mittels der Auswerte- und Steuereinheit zu dem erfassten Ist-Wert der Einschaltdauer der Gaslaseranordnung und/oder zu dem erfassten Ist-Wert der Stillstandszeit der Gaslaseranordnung seit dem unmittelbar vorausgegangen Laserbetrieb ein Steuerwert für zumindest einen Betriebsparameter der Vorrichtung zum Lasergasaustausch ermittelbar und die letztgenannte Vorrichtung anhand des ermittelten Steuerwertes steuerbar ist.

In Abhängigkeit von dem oder den Gaszustandsparametern, deren Ist-Wert neben dem Ist-Wert der Einschaltdauer der Gaslaseranordnung und/oder der Stillstandszeit der Gaslaseranordnung seit dem unmittelbar vorausgegangenen Laserbetrieb die Grundlage für die Ermittlung des Steuerwertes für wenigstens einen Betriebsparameter der Vorrichtung zum Lasergasaustausch bildet, weist die erfindungsgemäße Vorrichtung zur Durchführung des Steuerungsverfahrens eine Analysevorrichtung zur Erfassung des Ist-Wertes des Anteils wenigstens einer Komponente bzw. des Ausmaßes der Verunreinigung des Lasergases in dem Gasentladungsraum und/oder eine Vorrichtung zur Erfassung des Ist-Wertes der Temperatur des Lasergases in dem Gasentladungsraum und/oder eine Vorrichtung zur Erfassung des Ist-Wertes der momentanen Laserleistung auf. Mittels der Auswerte- und Steuereinheit der erfindungsgemäßen Vorrichtung ist zu den erfassten Ist-Werten ein Steuerwert für zumindest einen Betriebsparameter der Vorrichtung zum Lasergasaustausch ermittelbar und die letztgenannte Vorrichtung anhand des ermittelten Steuerwertes steuerbar.

Zur Umsetzung derjenigen Variante des erfindungsgemäßen Verfahrens, die als Verfahrensschritt einen Vergleich des ermittelten Ist-Wertes des oder der Gaszustandsparamter mit einem zugehörigen Soll-Wert vorsieht, ist erfindungsgemäß eine Vorrichtung bestimmt, deren Auswerte- und Steuereinheit eine Vergleichseinheit umfasst zum Vergleich des oder der erfassten Ist-Werte des oder der Gaszustandsparameter mit einem zugeordneten Soll-Wert sowie eine Berechnungseinheit zur Ermittlung des Steuerwertes für zumindest einen Betriebsparameter der Vorrichtung zum Lasergasaustausch auf der Grundlage des Ergebnisses des Ist-Soll-Wert-Vergleichs.

Nachfolgend wird die Erfindung anhand einer schematischen Darstellung zu einem Ausführungsbeispiel näher erläutert.

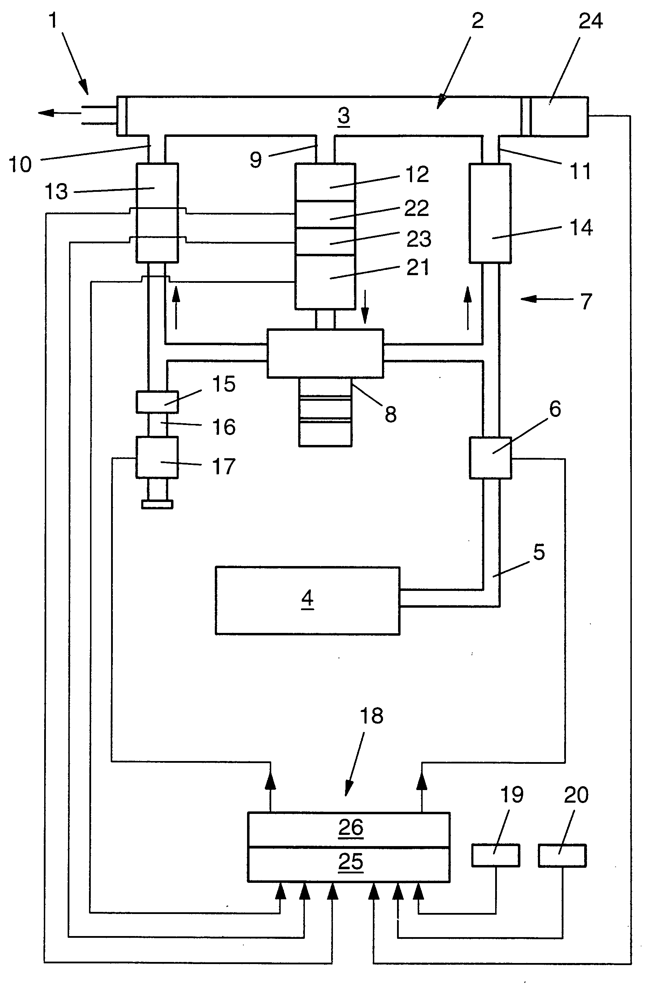

Ausweislich der Zeichnung umfaßt eine Gaslaseranordnung 1 einen Resonator 2 herkömmlicher Bauart mit einem Gasentladungsraum 3. In dem Gasentladungsraum 3 anstehendes Lasergas, bei welchem es sich um ein Gemisch um Kohlendioxid, Helium und Stickstoff handelt, entstammt einer Lasergasversorgung 4. Letztere ist über eine Zufuhrleitung 5 und ein steuerbares Einlaßventil 6 an einen Lasergaskreislauf 7, in welchen auch der Gasentladungsraum 3 des Resonators 2 eingeschaltet ist, angeschlossen. Lasergas wird mittels eines Radialgebläses 8 des Lasergaskreislaufs 7 auf die übliche Art und Weise über eine Ansaugleitung 9 aus dem Gasentladungsraum 3 des Resonators 2 abgesaugt und über Druckleitungen 10, 11 dem Gasentladungsraum 3 wieder zugeführt. Dabei wird das Lasergas mittels Kühlern 12, 13, 14, die in die Ansaugleitung 9 bzw. die Druckleitungen 10, 11 eingeschaltet sind, gekühlt. Mittels einer Vakuumpumpe 15 wird der Druck des in dem Lasergaskreislauf 7 zirkulierenden Lasergases auf einen Wert eingestellt, der wesentlich niedriger ist als der Luftdruck in der Umgebung der Gaslaseranordnung 1. Mit der freien Atmosphäre steht der Lasergaskreislauf 7 über eine Auslaßleitung 16 mit einem steuerbaren Auslaßventil 17 in Verbindung.

Zur Steuerung des Auslaßventils 17 ebenso wie zur Steuerung des Einlaßventils 6 dient eine Auswerte- und Steuereinheit 18, die über entsprechende, in der Zeichnung angedeutete Steuerleitungen an das Einlaßventil 6 sowie das Auslaßventil 17 angeschlossen ist. Verbunden ist die Auswerte- und Steuereinheit 18 weiterhin mit einem Betriebsstundenzähler 19, einer Uhr 20, einer Lasergas-Analysevorrichtung 21, einer Vorrichtung 22 zur Erfassung der Temperatur des Lasergases in dem Gasentladungsraum 3, einem Druckmesser 23 sowie einer Vorrichtung 24 zur Messung der Laserleistung. Die Auswerte- und Steuereinheit 18 wird von einem Zentralrechner gebildet und umfaßt eine Vergleichseinheit 25 sowie eine Berechnungseinheit 26.

Die über den Betriebsstundenzähler 19, die Uhr 20, die Lasergas-Analysevorrichtung 21, die Vorrichtung 22 zur Erfassung der Temperatur des Lasergases in dem Gasentladungsraum 3, den Druckmesser 23 sowie die Vorrichtung 24 zur Messung der Laserleistung verfügbaren Daten können von der Auswerte- und Steuereinheit 18 jeweils einzeln oder in Teilkombination oder in Gesamtkombination abgerufen werden. Der Betriebsstundenzähler 19 dient zur Ermittlung des Ist-Wertes der Einschaltdauer der Gaslaseranordnung 1, die Uhr 20 zur Ermittlung des Ist-Wertes der Stillstandszeit der Gaslaseranordnung 1 seit dem unmittelbar vorausgegangenen Laserbetrieb, die Analysevorrichtung 21 zur Ermittlung des Ist-Wertes der Anteile der Komponenten sowie des Ausmaßes der Verunreinigung des Lasergases in dem Gasentladungsraum 3, die Vorrichtung 22 zur Ermittlung des Ist-Wertes der Temperatur des Lasergases in dem Gasentladungsraum 3 und die Vorrichtung 24 zur Ermittlung des Ist-Wertes der momentanen Laserleistung. Sämtliche vorstehend genannte Gaszustandsparameter repräsentieren die Zusammensetzung des Inhaltes des Gasentladungsraumes 3. Der Druckmesser 23 erlaubt die Bestimmung des Ist-Wertes des in dem Lasergaskreislauf 7 und damit des in dem Gasentladungsraum 3 herrschenden Druckes und gibt folglich Aufschluß über den Wert einer weiteren, die Funktionsfähigkeit der Gaslaseranordnung 1 mitbestimmenden Größe.

Auf der Grundlage des ermittelten Ist-Wertes eines, mehrerer oder sämtlicher, die Zusammensetzung des Inhaltes des Gasentladungsraumes 3 repräsentierender Gaszustandsparameter führt die Vergleichseinheit 25 der Auswerte- und Steuereinheit 18 einen Ist-Soll-Wert-Vergleich durch, im Rahmen dessen dem ermittelten Ist-Wert ein in der Auswerte- und Steuereinheit 18 hinterlegter Soll-Wert gegenübergestellt wird. Ausgehend von dem Vergleichsergebnis ermittelt die Berechnungseinheit 26 Steuerwerte für Betriebsparameter des Einlaßventiles 6 sowie des Auslaßventiles 17. Das Einlaßventil 6 und das Auslaßventil 17 bilden gemeinsam mit der Lasergasversorgung 4 eine Vorrichtung zum Lasergasaustausch an dem Gasentladungsraum 3.

Wird beispielsweise mittels der Analysevorrichtung 21 für den Kohlenmonoxidgehalt des in dem Gasentladungsraum 3 anstehenden Lasergases ein Ist-Wert ermittelt, der von dem hinterlegten Soll-Wert abweicht, so werden von der Berechnungseinheit 26 der Auswerte- und Steuereinheit 18 ausgehend von dem Ergebnis des durchgeführten Ist-Soll-Wert-Vergleichs für die Betriebsparameter "Durchflußquerschnitt" und "Öffnungsdauer" des Einlaßventils 6 sowie des Auslaßventils 17 Steuerwerte ermittelt, und diese in eine Steuerung des Einlaßventils 6 sowie des Auslaßventils 17 umgesetzt, aufgrund derer dem Lasergaskreislauf 7 von der Lasergasversorgung 4 Lasergas in der zur Beseitigung der Ist-Soll-Wert-Abweichung erforderlichen Austauschmenge zugeführt wird. In dem dargestellten Beispielsfall wird die Lasergasversorgung 4 im wesentlichen von einem Vorratsbehälter mit Lasergas in der gewünschten Zusammensetzung gebildet. Derartiges Lasergas steht unter Druck permanent in der Zufuhrleitung 5 an. Ergänzend oder alternativ könnte die Lasergasversorgung 4 für die einzelnen Komponenten des Lasergases separate Vorratsbehälter umfassen, die dann separat ansteuerbar sein könnten. In diesem Fall ließe sich dem Gasentladungsraum 3 erforderlichenfalls auch ein einzelner Bestandteil des Lasergasgemisches gesteuert zuführen.

Die Ist-Wert-Ermittlung, der Ist-Soll-Wert-Vergleich sowie die Steuerwertermittlung erfolgen programmgesteuert und fortlaufend, so daß der über das Einlaßventil 6 sowie das Auslaßventil 17 bewirkte Lasergasaustausch unverzüglich eingestellt oder auf ein geringes Maß reduziert werden kann, sobald in dem Gasentladungsraum 3 Lasergas mit der gewünschten Zusammensetzung ansteht.

Die Steuerung des Druckes des in dem Lasergaskreislauf 7 bzw. dem Gasentladungsraum 3 anstehenden Lasergases erfolgt in entsprechender Art und Weise. Im Falle eines unter dem Soll-Wert liegenden Druckes kann beispielsweise lediglich das Einlaßventil 6 öffnend gesteuert und das Auslaßventil 17 geschlossen gehalten werden, um auf diese Art und Weise den Lasergaskreislauf 7 mit Lasergas in der erforderlichen Menge aufzufüllen.

## Patentansprüche

1. Verfahren zur Steuerung einer Vorrichtung (4, 6, 17) zum Lasergasaustausch an einem Gasentladungsraum (3) einer Gaslaseranordnung (1), wobei der Ist-Wert wenigstens eines die Zusammensetzung des Inhaltes des Gasentladungsraumes (3) repräsentierenden Gaszustandsparamters ermittelt, anhand des ermittelten Ist-Wertes des Gaszustandsparameters ein Steuerwert für zumindest einen Betriebsparameter der Vorrichtung (4, 6, 17) zum Lasergasaustausch ermittelt und die Vorrichtung (4, 6, 17) zum Lasergasaustausch auf der Grundlage des ermittelten Steuerwertes gesteuert wird, dadurch gekennzeichnet, daß der Steuerwert für zumindest einen Betriebsparameter der Vorrichtung (4, 6, 17) zum Lasergasaustausch anhand des ermittelten Ist-Wertes der Einschaltdauer der Gaslaseranordnung (1) und/oder der Stillstandszeit der Gaslaseranordnung (1) seit dem unmittelbar vorausgegangenen Laserbetrieb ermittelt wird.

2. Verfahren nach Anspruch 1, dadurch gekennzeichnet, daß der Steuerwert für zumindest einen Betriebsparameter der Vorrichtung (4, 6, 17) zum Lasergasaustausch außerdem anhand des ermittelten Ist-Wertes des Anteils wenigstens einer Komponente des Lasergases in dem Gasentladungsraum (3) und/oder des Kohlenmonoxidgehaltes des Lasergases in dem Gasentladungsraum (3) und/oder des Ausmaßes der Verunreinigung des Lasergases in dem Gasentladungsraum (3) und/oder des Wassergehaltes des Inhaltes des Gasentladungsraumes (3) und/oder der Temperatur des Lasergases in dem Gasentladungsraum (3) und/oder der momentanen Laserleistung ermittelt wird.

3. Verfahren nach einem der vorhergehenden Ansprüche, dadurch gekennzeichnet, daß der Steuerwert für zumindest einen Betriebsparameter der Vorrichtung (4, 6, 17) zum Lasergasaustausch auf der Grundlage eines Vergleichs des ermittelten Ist-Wertes eines Gaszustandsparameters mit einem zugehörigen Soll-Wert ermittelt wird.

4. Verfahren nach einem der vorhergehenden Ansprüche, wobei die Vorrichtung (4, 6, 17) zum Lasergasaustausch wenigstens ein Ventil (6, 17) aufweist, dadurch gekennzeichnet, daß ein Steuerwert für die Lasergasdurchflußmenge durch das oder die Ventile (6, 17) ermittelt wird.

5. Verfahren nach einem der vorhergehenden Ansprüche, dadurch gekennzeichnet, daß das Verfahren programmgesteuert durchgeführt wird.

6. Vorrichtung zur Durchführung des Verfahrens nach wenigstens einem der vorhergehenden Ansprüche mit einer Steuerungseinrichtung für eine Vorrichtung (4, 6, 17) zum Lasergasaustausch an einem Gasentladungsraum (3) einer Gaslaseranordnung (1), wobei die Steuerungseinrichtung eine Auswerte- und Steuereinheit (18) umfaßt, welche mit zumindest einer Vorrichtung zur Erfassung des Ist-Wertes wenigstens eines die Zusammensetzung des Inhaltes des Gasentladungsraumes (3) repräsentierenden Gaszustandsparameters sowie mit der Vorrichtung (4, 6, 17) zum Lasergasaustausch in Verbindung steht und mittels welcher zu dem oder den erfaßten Ist-Werten des oder der Gaszustandsparameter ein Steuerwert für zumindest einen Betriebsparameter der Vorrichtung (4, 6, 17) zum Lasergasaustausch ermittelbar und die letztgenannte Vorrichtung (4, 6, 17) anhand des ermittelten Steuerwertes steuerbar ist, dadurch gekennzeichnet, daß ein Betriebsstundenzähler (19) zur Erfassung des Ist-Wertes der Einschaltdauer der Gaslaseranordnung (1) und/oder eine Uhr (20) zur Erfassung des Ist-Wertes der Stillstandszeit der Gaslaseranordnung (1) seit dem unmittelbar vorausgegangenen Laserbetrieb vorgesehen ist und mittels der Auswerte- und Steuereinheit (18) zu dem erfaßten Ist-Wert der Einschaltdauer der Gaslaseranordnung (1) und/oder zu dem erfaßten Ist-Wert der Stillstandszeit der Gaslaseranordnung (1) seit dem unmittelbar vorausgegangenen Laserbetrieb ein Steuerwert für zumindest einen Betriebsparameter der Vorrichtung (4, 6, 17) zum Lasergasaustausch ermittelbar und die letztgenannte Vorrichtung (4, 6, 17) anhand des ermittelten Steuerwertes steuerbar ist.

7. Vorrichtung nach Anspruch 6, dadurch gekennzeichnet, daß außerdem eine Analysevorrichtung (21) zur Erfassung des Ist-Wertes des Anteils wenigstens einer Komponente bzw. des Ausmaßes der Verunreinigung des Lasergases in dem Gasentladungsraum (3) und/ oder eine Vorrichtung (22) zur Erfassung des Ist-Wertes der Temperatur des Lasergases in dem Gasentladungsraum (3) und/oder eine Vorrichtung (24) zur Erfassung des Ist-Wertes der momentanen Laserleistung vorgesehen ist und mittels der Auswerte- und Steuereinheit (18) zu den erfaßten Ist-Werten ein Steuerwert für zumindest einen Betriebsparameter der Vorrichtung (4, 6, 17) zum Lasergasaustausch ermittelbar und die letztgenannte Vorrichtung (4, 6, 17) anhand des ermittelten Steuerwertes steuerbar ist.

8. Vorrichtung nach Anspruch 6 oder 7, dadurch gekennzeichnet, daß die Auswerte- und Steuereinheit (18) eine Vergleichseinheit (25) umfaßt zum Vergleich des oder der erfaßten Ist-Werte des oder der Gaszustandsparameter mit einem zugeordneten Soll-Wert sowie eine Berechnungseinheit (26) zur Ermittlung des Steuerwertes für zumindest einen Betriebsparameter der Vorrichtung (4, 6, 17) zum Lasergasaustausch auf der Grundlage des Ergebnisses des Ist-Soll-Wert-Vergleiches.

## Claims

1. Method for controlling an apparatus (4, 6, 17) for laser gas exchange at a qas discharge chamber (3) of a gas laser arrangement (1), in which the actual value of at least one gas state parameter representing the composition of the contents of the gas discharge chamber (3) is determined, a control value for at least one operating parameter of the apparatus (4, 6, 17) for laser gas exchange is determined on the basis of the determined actual value of the gas state parameter, and the apparatus (4, 6, 17) for laser gas exchange is controlled on the basis of the determined control value, characterised in that the control value for at least one operating parameter of the apparatus (4, 6, 17) for laser gas exchange is determined on the basis of the determined actual value of the on-period of the gas laser arrangement (1) and/or of the stoppage time of the gas laser arrangement (1) since the immediately preceding laser operation.

2. Method according to claim 1, characterised in that the control value for at least one operating parameter of the apparatus (4, 6, 17) for laser gas exchange is also determined on the basis of the determined actual value of the amount of at least one component of the laser gas in the gas discharge chamber (3) and/or of the carbon monoxide content of the laser gas in the gas discharge chamber (3) and/or of the extent of contamination of the laser gas in the gas discharge chamber (3) and/or of the water content of the contents of the gas discharge chamber (3) and/or of the temperature of the laser gas in the gas discharge chamber (3) and/or of the instantaneous laser power.

3. Method according to either of the preceding claims, characterised in that the control value for at least one operating parameter of the apparatus (4, 6, 17) for laser gas exchange is determined on the basis of a comparison of the determined actual value of a gas state parameter with an associated desired value.

4. Method according to any one of the preceding claims, the apparatus (4, 6, 17) for laser gas exchange having at least one valve (6, 17), characterised in that a control value is determined for the laser gas flow rate through the valve(s) (6, 17).

5. Method according to any one of the preceding claims, characterised in that the method is carried out in a programme-controlled manner.

6. Apparatus for carrying out the method according to at least one of the preceding claims, having a control device for an apparatus (4, 6, 17) for laser gas exchange at a gas discharge chamber (3) of a gas laser arrangement (1), the control device comprising an evaluating and control unit (18) which is connected to at least one apparatus for detecting the actual value of at least one gas state parameter representing the composition of the contents of the gas discharge chamber (3) and to the apparatus (4, 6, 17) for laser gas exchange and by means of which a control value for at least one operating parameter of the apparatus (4, 6, 17) for laser gas exchange can be determined in respect of the detected actual value (s) of the gas state parameter (s) and the last-mentioned apparatus (4, 6, 17) is controllable on the basis of the determined control value, characterised in that an operating hours counter (19) is provided for detecting the actual value of the on-period of the gas laser arrangement (1) and/or a clock (20) is provided for detecting the actual value of the stoppage time of the gas laser arrangement (1) since the immediately preceding laser operation, and, by means of the evaluating and control unit 18, a control value for at least one operating parameter of the apparatus (4, 6, 17) for laser gas exchange can be determined in respect of the detected actual value of the on-period of the gas laser arrangement (1) and/or in respect of the detected actual value of the stoppage time of the gas laser arrangement (1) since the immediately preceding laser operation, and the last-mentioned apparatus (4, 6, 17) is controllable on the basis of the determined control value.

7. Apparatus according to claim 6, characterised in that, in addition, an analysis device (21) is provided to detect the actual value of the amount of at least one component or of the extent of contamination of the laser gas in the gas discharge chamber (3) and/or a device (22) is provided to detect the actual value of the temperature of the laser gas in the gas discharge chamber (3) and/or a device (24) is provided to detect the actual value of the instantaneous laser power, and, by means of the evaluating and control unit (18), a control value for at least one operating parameter of the apparatus (4, 6, 17) for laser gas exchange can he determined in respect of the detected actual values and the last-mentioned apparatus (4, 6, 17) is controllable on the basis of the determined control value.

8. Apparatus according to claim 6 or 7, characterised in that the evaluating and control unit (18) comprises a comparison unit (25) for comparing the detected actual value(s) of the gas state parameter(s) with an associated desired value, and a calculating unit (26) for determining the control value for at least one operating parameter of the apparatus (4, 6, 17) for laser gas exchange on the basis of the result of the comparison of the actual value(s) with the desired value.

## Revendications

1. Procédé de commande d'un échangeur (4, 6, 17) de gaz à laser raccordé à un espace (3) de décharge de gaz d'un laser à gaz (1), procédé dans lequel on établit la valeur réelle d'au moins un paramètre d'état gazeux, représentant la composition du contenu de l'espace (3) de décharge de gaz ; on établit, à l'appui de la valeur réelle établie dudit paramètre d'état gazeux, une valeur de commande pour au moins un paramètre de fonctionnement de l'échangeur (4, 6, 17) de gaz à laser ; et on commande ledit échangeur (4, 6, 17) de gaz à laser sur la base de la valeur de commande établie, caractérisé par le fait que la valeur de commande, pour au moins un paramètre de fonctionnement de l'échangeur (4, 6, 17) de gaz à laser, est établie à l'appui de la valeur réelle établie relative à la durée d'enclenchement du laser à gaz (1) et/ou au temps d'immobilisation dudit laser à gaz (1) depuis le fonctionnement du laser immédiatement précédent.

2. Procédé selon la revendication 1, caractérisé par le fait que la valeur de commande, pour au moins un paramètre de fonctionnement de l'échangeur (4, 6, 17) de gaz à laser, est en outre établie à l'appui de la valeur réelle établie relative à la part d'au moins un composant du gaz à laser dans l'espace (3) de décharge de gaz, et/ou à la teneur en monoxyde de carbone dudit gaz à laser dans ledit espace (3) de décharge de gaz, et/ou à l'ampleur de l'encrassement dudit gaz à laser dans ledit espace (3) de décharge de gaz, et/ou à la teneur en eau du contenu dudit espace (3) de décharge de gaz, et/ou à la température dudit gaz à laser dans ledit espace (3) de décharge de gaz, et/ou à la puissance instantanée du laser.

3. Procédé selon l'une des revendications précédentes, caractérisé par le fait que la valeur de commande, pour au moins un paramètre de fonctionnement de l'échangeur (4, 6, 17) de gaz à laser, est établie sur la base d'une comparaison, avec une valeur de consigne associée, de la valeur réelle établie relative à un paramètre d'état gazeux.

4. Procédé selon l'une des revendications précédentes, l'échangeur (4, 6, 17) de gaz à laser présentant au moins une vanne (6, 17), caractérisé par le fait qu'une valeur de commande est établie pour le débit de gaz à laser parcourant la ou les vanne(s) (6, 17).

5. Procédé selon l'une des revendications précédentes, caractérisé par le fait que ledit procédé est exécuté avec commande programmée.

6. Appareil pour la mise en oeuvre du procédé selon au moins l'une des revendications précédentes, comprenant un dispositif de pilotage pour un échangeur (4, 6, 17) de gaz à laser raccordé à un espace (3) de décharge de gaz d'un laser à gaz (1), ledit dispositif de pilotage englobant une unité (18) d'interprétation et de commande qui est connectée à au moins un dispositif de détection de la valeur réelle relative à au moins un paramètre d'état gazeux représentant la composition du contenu dudit espace (3) de décharge de gaz, ainsi qu'audit échangeur (4, 6, 17) de gaz à laser, et au moyen de laquelle, concernant ladite ou lesdites valeur(s) réelle(s) détectée(s), relative(s) au(x)dit(s) paramètre(s) d'état gazeux, il est possible d'établir une valeur de commande pour au moins un paramètre de fonctionnement de l'échangeur (4, 6, 17) de gaz à laser, et de commander ledit échangeur (4, 6, 17) à l'appui de ladite valeur de commande établie, caractérisé par le fait qu'il est prévu un compteur (19) d'heures de fonctionnement, afin de détecter la valeur réelle relative à la durée d'enclenchement du laser à gaz (1), et/ou une horloge (20) afin de détecter la valeur réelle relative au temps d'immobilisation dudit laser à gaz (1) depuis le fonctionnement du laser immédiatement précédent ; et, concernant la valeur réelle détectée relative à la durée d'enclenchement du laser à gaz (1), et/ou concernant la valeur réelle détectée relative au temps d'immobilisation dudit laser à gaz (1) depuis le fonctionnement du laser immédiatement précédent, l'unité (18) d'interprétation et de commande permet d'établir une valeur de commande pour au moins un paramètre de fonctionnement de l'échangeur (4, 6, 17) de gaz à laser, et de commander ledit échangeur (4, 6, 17) à l'appui de ladite valeur de commande établie.

7. Appareil selon la revendication 6, caractérisé par le fait qu'il est prévu, par ailleurs, un dispositif d'analyse (21) conçu pour détecter la valeur réelle relative à la part d'au moins un composant ou, respectivement, à l'ampleur de l'encrassement du gaz à laser dans l'espace (3) de décharge de gaz, et/ou un dispositif (22) conçu pour détecter la valeur réelle relative à la température dudit gaz à laser dans ledit espace (3) de décharge de gaz, et/ou un dispositif (24) conçu pour détecter la valeur réelle relative à la puissance instantanée du laser ; et, concernant les valeurs réelles détectées, l'unité (18) d'interprétation et de commande permet d'établir une valeur de commande pour au moins un paramètre de fonctionnement de l'échangeur (4, 6, 17) de gaz à laser, et de commander ledit échangeur (4, 6, 17) à l'appui de ladite valeur de commande établie.

8. Appareil selon la revendication 6 ou 7, caractérisé par le fait que l'unité (18) d'interprétation et de commande englobe une unité comparatrice (25) en vue de la comparaison, avec une valeur de consigne associée, de la ou des valeur(s) réelle(s) détectée(s), relative(s) au(x)dit(s) paramètre(s) d'état gazeux, ainsi qu'une unité calculatrice (26) en vue d'établir, sur la base du résultat de la comparaison valeur(s) réelle(s)/valeur de consigne, la valeur de commande pour au moins un paramètre de fonctionnement de l'échangeur (4, 6, 17) de gaz à laser.
